Europäisches Patentamt

European Patent Office

Office européen des brevets

(11) Numéro de publication: **0 403 923**

**A1**

## (12) DEMANDE DE BREVET EUROPEEN

(21) Numéro de dépôt: **90111047.8**

(22) Date de dépôt: **12.06.90**

(51) Int. Cl.5: **H04M 1/72, H04M 9/02**

(30) Priorité: **19.06.89 FR 8908236**

(43) Date de publication de la demande:
**27.12.90 Bulletin 90/52**

(84) Etats contractants désignés:
**CH DE DK GB IT LI**

(71) Demandeur: **ETA SA Fabriques d'Ebauches**
**Schild-Rust-Strasse 17**
**CH-2540 Granges(CH)**

(72) Inventeur: **Kappeler, Markus**
**St. Josefsgasse 6**
**CH-4500 Solothurn(CH)**
Inventeur: **Voser, Beat**
**Schulstrasse 14**
**CH-2540 Grenchen(CH)**

(74) Mandataire: **de Montmollin, Henri et al**
**ICB Ingénieurs Conseils en Brevets SA**
**Passage Max Meuron 6**
**CH-2001 Neuchâtel(CH)**

(54) Dispositif téléphonique destiné à être relié à plusieurs lignes téléphoniques.

㊗ Le dispositif (1) évite à son usager d'avoir à sélectionner lui-même, manuellement, une ligne libre lorsqu'il désire appeler un correspondant.

Pour cela, le dispositif (1) comporte un détecteur de tension de ligne (11) qui produit un signal d'occupation lorsque, au moment où l'usager soulève le combiné (2) dans l'intention d'appeler un correspon-dant, la ligne à laquelle est relié le dispositif (1) est occupée par une communication etablie avec un autre appareil téléphonique branché sur la même ligne. Le circuit de commande (13) du dispositif (1) utilise alors ce signal d'occupation pour commander la liaison du dispositif avec une autre ligne.

Fig.1

EP 0 403 923 A1

# DISPOSITIF TELEPHONIQUE DESTINE A ETRE RELIE A PLUSIEURS LIGNES TELEPHONIQUES

La présente invention a pour objet un dispositif téléphonique destine a être relié à une pluralité de lignes téléphoniques susceptibles de présenter chacune un état libre et un état occupé et de transmettre chacune un signal d'appel, comportant un ensemble électro-acoustique comprenant un microphone et un écouteur et des moyens de commutation répondant à l'un quelconque desdits signaux d'appel pour relier sélectivement ledit ensemble électro-acoustique à celle desdites lignes qui transmet ce signal d'appel.

De tels dispositifs sont bien connus. Ainsi, par exemple, l'administration suisse des téléphones offre en location à ses abonnés un accessoire appelé "Accessoire pour deux lignes Tritel BZ 85.22." et pouvant être relié d'une part à deux lignes téléphoniques et d'autre part à un appareil téléphonique classique pour former avec ce dernier un dispositif répondant à la définition donnée ci-dessus.

Lorsqu'un signal d'appel est reçu sur l'une des deux lignes reliées au dispositif, l'accessoire évoqué ci-dessus établit automatiquement une liaison entre cette ligne et l'appareil téléphonique, de sorte que, lorsque l'utilisateur de ce dernier décroche le combiné pour répondre à cet appel, il se trouve immédiatement en communication avec son correspondant sans avoir à effectuer une quelconque autre manipulation.

Si l'une des deux lignes a été définie comme ligne prioritaire, et que l'accessoire mentionné ci-dessus a été agence en conséquence, le combine de l'appareil téléphonique est toujours relié à cette ligne prioritaire lorsqu'il est décroché au debut de l'établissement d'une communication par l'utilisateur.

Sinon, cet utilisateur doit sélectionner l'une des deux lignes en actionnant un bouton-poussoir pour pouvoir appeler un correspondant.

Il arrive de plus en plus souvent que deux appareils téléphoniques, ou plus, soient reliés en parallèle sur la même ligne d'abonné, ces divers appareils pouvant par exemple être situés dans diverses pièces d'un même appartement ou d'une même maison.

Dans un tel cas, il peut très bien arriver que, lorsque l'utilisateur d'un dispositif tel que celui qui a été décrit ci-dessus décroche le combiné de son appareil pour appeler un correspondant, ce combiné soit justement relié à une ligne déjà occupée par un autre appareil. Cet utilisateur doit alors sélectionner manuellement l'autre ligne pour pouvoir faire son appel.

Un but de la présente invention est de proposer un dispositif téléphonique du genre de celui qui a été défini ci-dessus, mais qui ne présente pas cet inconvenient, c'est-à-dire dont le combiné soit automatiquement relié à une ligne libre, s'il en existe une, lorsque son utilisateur décroche ce combiné pour appeler un correspondant.

Ce but est atteint par le dispositif revendiqué.

L'invention va maintenant être décrite à l'aide du dessin annexé dans lequel :

- la figure 1 représente schématiquement une première forme d'exécution du dispositif selon l'invention ,

- la figure 2 représente le schéma d'un circuit de commande utilisable dans le dispositif de la figure 1;

- la figure 3 représente le schéma d'un détecteur de tension de ligne utilisable dans le circuit de la figure 2 ; et

- la figure 4 représente schématiquement une deuxième forme d'exécution du dispositif selon l'invention.

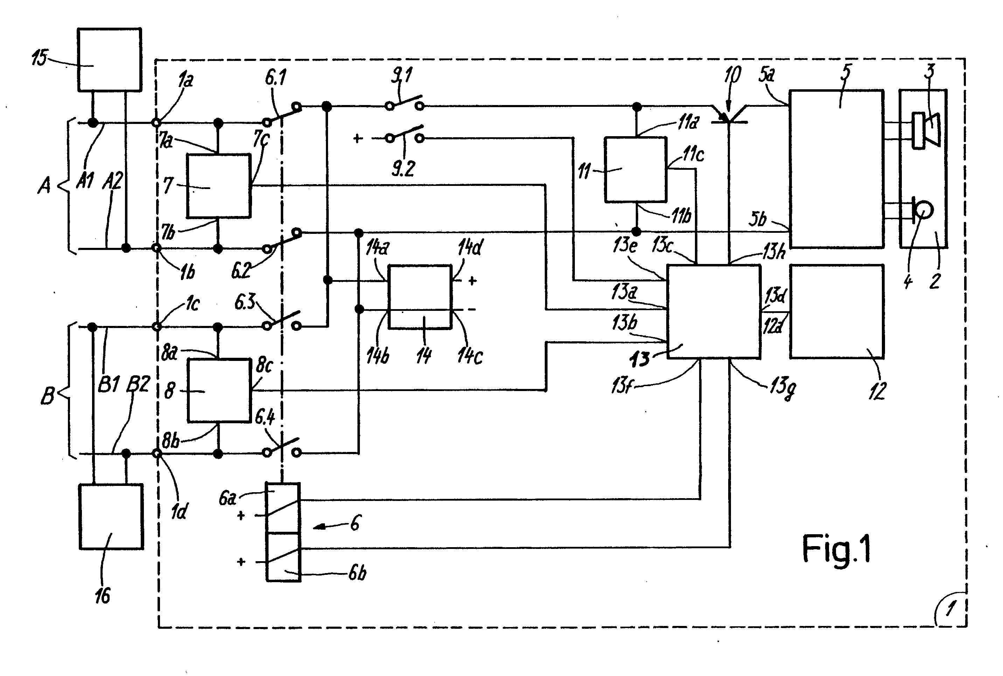

Le dispositif téléphonique selon l'invention représenté schématiquement à la figure 1 avec la référence 1 comporte quatre bornes de raccordement 1a, 1b, 1c et 1d. Les bornes 1a et 1b sont destinées a être reliées à deux fils A1 et A2 formant ensemble une ligne téléphonique A dont l'autre extrémité est reliée à un central téléphonique. Les bornes 1c et 1d du dispositif 1 sont reliées a deux fils B1 et B2 formant ensemble une deuxième ligne téléphonique B dont l'autre extrémité est également reliée à un central téléphonique.

Le dispositif 1 comporte en outre, de manière classique, une base, qui n'a pas été représentée, reliée par un cordon à un combiné 2 comportant un écouteur 3 et un microphone 4. Lorsqu'il n'est pas utilisé, le combiné 2 peut être posé sur un support faisant partie de la base.

Toujours de manière classique, le combiné 4 est relié à la sortie d'un circuit vocal 5 permettant de séparer les signaux destinés à exciter l'écouteur 3 de ceux qui sont produits par le microphone 4.

Le dispositif 1 comporte encore un relais bistable 6 comprenant deux bobines 6a et 6b ayant chacune une première borne reliée au pôle positif d'une source d'alimentation qui sera décrite plus loin et une deuxième borne reliée à un circuit de commande qui sera également décrit plus loin.

Le relais 6 comprend également quatre contacts unipolaires 6.1, 6.2, 6.3 et 6.4 reliés mécaniquement entre eux de manière que les contacts 6.1 et 6.2 soient toujours dans le même état fermé ou ouvert, et que les contacts 6.3 et 6.4 soient toujours dans l'état opposé à celui des contacts 6.1 et 6.2.

Le relais 6 est en outre agence de manière que ses contacts 6.1 à 6.4 soient mis dans l'état représente à la figure 1 par une impulsion de courant appliquée à sa bobine 6a, et dans leur état opposé par une impulsion de courant appliquée à sa bobine 6b. Ces deux états seront respectivement désignés, de manière arbitraire, comme étant le premier et le deuxième état du relais 6.

Les premières bornes des contacts 6.1 et 6.2 sont respectivement reliées aux bornes 1a et 1b du dispositif 1, et aux bornes 7a et 7b d'un circuit d'appel 7.

Ce circuit d'appel 7 ne sera pas décrit en détail ici car il est bien connu. Il suffit de mentionner que, dans cet exemple, il est agencé de manière que sa sortie 7c produise un signal ayant un état logique 1 en réponse aux signaux d'appel transmis par la ligne A et un état logique 0 en l'absence de ces signaux d'appel. Ces états logiques 0 et 1 seront définis plus loin.

En outre, le circuit d'appel 7 comprend, de manière classique, une sonnerie, un vibreur ou tout autre dispositif analogue produisant un son ou bruit caractéristique en réponse aux signaux d'appel mentionnés ci-dessus. Le cas échéant, le circuit 7 peut également comporter une lampe-témoin qui s'allume en réponse à ces signaux d'appel.

De même, les premières bornes des contacts 6.3 et 6.4 sont respectivement reliées aux bornes 1c et 1d du dispositif 1, et aux bornes 8a et 8b d'un autre circuit d'appel 8.

Ce circuit 8 est semblable au circuit 7 mentionné ci-dessus. De manière analogue à ce dernier, il comporte une sortie 8c qui produit un signal logique ayant l'état 1 en réponse aux signaux d'appel transmis par le ligne B et l'état 0 en l'absence de ces signaux d'appel. Toujours comme le circuit 7, ce circuit 8 comporte une sonnerie, un vibreur ou un autre dispositif analogue produisant un son ou un bruit caractéristique en réponse aux signaux d'appel transmis par la ligne B, et, le cas échéant, une lampe-témoin qui s'allume en réponse à ces signaux d'appel.

Les deuxièmes bornes des contacts 6.1 et 6.3 sont reliées, ensemble, à la première borne d'un contact 9.1 qui, dans le présent exemple, est actionne par un poussoir disposé dans le support du combiné 2 de manière que ce contact 9.1 soit ouvert lorsque ce combiné 2 n'est pas utilisé et repose sur ce support et soit ouvert lorsque ce combiné 2 est séparé de ce support pour être utilisé.

La deuxième borne du contact 9.1 est reliée à l'émetteur d'un transistor bipolaire pnp 10, dont le collecteur est relié à une première borne 5a du circuit vocal 5, et à une première borne 11a d'un circuit détecteur de tension 11 qui sera décrit en détail plus loin.

Les deuxièmes bornes des contacts 6.2 et 6.4 sont reliées, ensemble, à .une deuxième borne 5b du circuit vocal 5 et à une deuxième borne 11b du circuit détecteur de tension 11.

Le dispositif 1 de la figure 1 comporte en outre un circuit formateur d'impulsions de sélection 12 qui peut par exemple comprendre un clavier à dix touches numérotées de 0 à 9 et un circuit électronique dont la sortie constitue la sortie 12a du circuit 12 et qui est agence de manière que cette sortie 12a soit normalement a l'état logique 0 et fournisse, en réponse à chaque actionnement d'une de ces touches, un certain nombre d'impulsions pendant lesquelles elle passe à l'état logique 1, ce nombre d'impulsions correspondant au numéro de cette touche.

Le dispositif 1 de la figure 1 comprend également un circuit de commande 13 dont un exemple sera décrit plus loin. Ce circuit 13 comporte des entrées 13a à 13d reliées respectivement aux sorties 7c, 8c, 11c et 12a des circuits 7, 8, 11 et 12, ainsi qu'une entrée 13e reliée à une première borne d'un contact 9.2 dont la deuxième borne est reliée au pôle positif de la source d'alimentation mentionnée ci-dessus. Comme le contact 9.1 auquel il est relié mécaniquement, ce contact 9.2 est ouvert lorsque le combiné 2 est posé sur le socle du dispositif 1 et fermé lorsque ce combiné 2 est utilisé.

Le circuit de commande 13 comporte encore des sorties 13f, 13g et 13h reliées respectivement aux deuxièmes bornes des bobines 6a et 6b du relais 6 et à la base du transistor 10.

L'énergie électrique nécessaire au fonctionnement des divers circuits du dispositif 1 est fournie par l'une ou l'autre des lignes A et B par l'intermédiaire d'une source 14 qui peut être, par exemple, un simple circuit stabilisateur de tension. Les entrées 14a et 14b de cette source 14 sont en effet respectivement reliées aux deuxièmes .bornes des contacts 6.1 et 6.3 et aux deuxièmes bornes des contacts 6.2 et 6.4, de sorte qu'elles sont reliées à l'une des lignes A et B quel que soit l'état du relais 6.

Les sorties 14c et 14d de la source 14, qui sont respectivement sa borne negative, désignée par le signe -, et sa borne positive, désignée par le signe +, sont reliées aux divers circuits du dispositif 1 par des connexions qui n'ont pas été représentées. En outre, la borne négative 14c est reliée à la borne d'entrée 14b et son potentiel est le potentiel de référence de tout le dispositif 1.

Les états logiques 0 et 1 qui ont déjà été mentionnes et dont il sera encore question plus loin correspondent respectivement au potentiel de la borne négative 14c et au potentiel de la borne positive 14d de cette source 14.

La figure 1 montre encore que deux autres appareils téléphoniques sont également reliés l'un à la ligne A et l'autre à la ligne B. Ces deux autres appareils téléphoniques, qui sont désignés par 15 et 16, peuvent être quelconques et ne seront pas décrits ici.

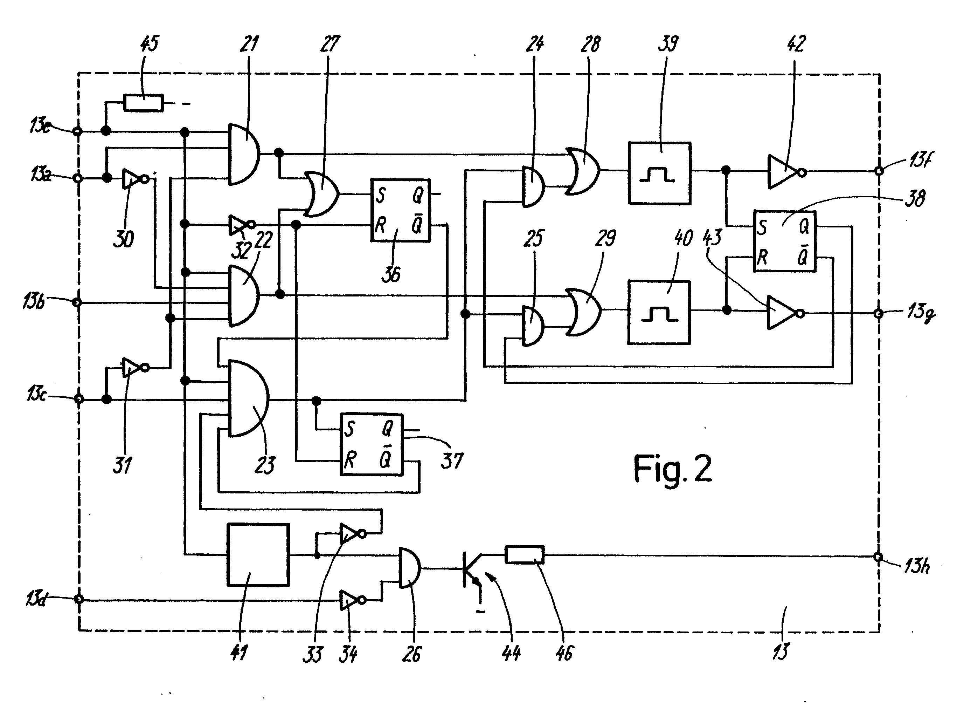

La figure 2 montre le schéma d'un exemple du circuit de commande 13 de la figure 1. Ce circuit 13 comporte des portes ET 21 à 26, des portes OU 27 à 29, des inverseurs 30 à 34, des flip-flops RS 36 a 38; des circuits monostables 39 et 40, un circuit temporisateur 41, deux amplificateurs inverseurs 42 et 43, un transistor bipolaire npn 44, et deux résistances 45 et 46.

Tous ces éléments sont reliés entre eux et avec les entrées et les sorties du circuit 13, qui sont désignées par les mêmes références que dans la figure 1, de la manière représentée dans la figure 2. Ces liaisons ne seront pas décrites plus en détail pour ne pas allonger inutilement la présente description.

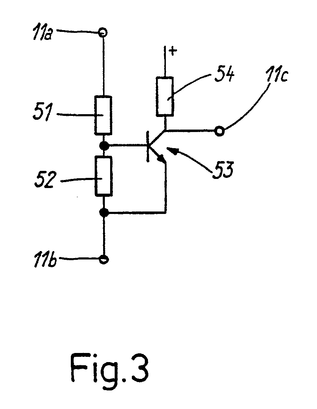

La figure 3 représente le schéma d'un exemple du circuit détécteur de tension 11 de la figure 1.

Dans cet exemple, ce circuit comporte deux résistances 51 et 52 branchées en série entre les bornes 11a et 11b. Le point commun de ces résistances 51 et 52 est relié à la base d'un transistor bipolaire npn 53 dont l'émetteur est également relié à la borne 11b et dont le collecteur est relié à la sortie 11c et, par l'intermédiaire d'une résistance 54, à la borne positive de la source d'alimentation 14.

Les résistances 51, 52 et 54 sont choisies de manière que le transistor 53 soit conducteur, et donc que la sortie 11c soit à l'état logique 0, lorsque la tension appliquée entre les bornes 11a et 11b est égale à celle qui est présente entre les deux fils d'une ligne téléphonique lorsque celle-ci est libre, c'est-à-dire par exemple 48 volts environ, et de manière que cette sortie 11c soit a l'état logique 1 lorsque la tension appliquée entre les bornes 11a et 11b est égale à celle qui est présente entre les deux fils d'une ligne téléphonique lorsque celle-ci est occupée, c'est-à-dire par exemple 10 volts environ.

Pour comprendre le fonctionnement du dispositif 1 de la figure 1, qui va être décrit ci-dessous en même temps que celui du circuit de commande 13 de la figure 2, il faut noter que, de manière classique, la sortie Q, ou sortie directe, de chaque flip-flop 36 à 38 prend l'état logique 0 ou 1 selon qu'un signal ayant l'état logique 1 est appliqué à son entrée R ou à son entrée S, la sortie $\overline{Q}$, ou sortie inverse, de chacun de ces flip-flops 36 à 38 ayant évidemment toujours l'état logique inverse de celui de leur sortie Q.

On notera encore que chacun des circuits monostables 39 et 40 délivre à sa sortie une impulsion de durée détérminée en réponse à chaque passage de l'état logique 0 à l'état logique 1 de son entrée, c'est-à-dire que cette sortie prend l'état logique 1 pendant cette durée détérminée, et repasse ensuite à l'état logique 0.

Comme cela sera rendu évident par la suite de cette description, cette durée détérminée est celle que doivent avoir les impulsions de courant appliquées à la bobine 6a ou à la bobine 6b du relais 6 pour que celui-ci bascule dans son premier état ou, respectivement, dans son deuxième état.

On notera en outre que, toujours de manière classique, la sortie du circuit temporisateur 41 à normalement le même état logique que son entrée, mais que, lorsque cette entrée passe de l'état logique 0 à l'état logique 1, le passage correspondant de cette sortie ne s'effectue qu'après écoulement d'un certain délai.

On admettra pour commencer cette description que le dispositif 1 n'est pas utilisé, c'est-à-dire que le combiné 2 est posé sur son support et que les contacts 9.1 et 9.2 sont ouverts, et que les appareils téléphoniques 15 et 16 sont également non utilisés.

Dans ces conditions, l'entrée 13e du circuit 13 est maintenue a l'état logique 0 puisqu'elle est reliée à la borne negative de la source d'alimentation 14 par l'intermédiaire de la résistance 45.

Dans ces conditions également, les autres entrées 13a à 13d du circuit 13 sont à l'état logique 0, et on voit facilement que les sorties 13f et 13g de ce circuit sont à l'état logique 1. Aucun courant ne passe donc dans les bobines 6a et 6b du relais 6. En outre, le transistor 44 est bloqué par le signal appliqué sur sa base par la sortie de la porte 26 qui est à l'état logique 0. Le transistor 10 est donc également bloqué.

Lorsque, dans ces conditions, un signal d'appel est transmis sur la ligne A, par exemple, le circuit 7 délivre à sa sortie 7c et donc a l'entrée 13a du circuit 13 un signal ayant l'état logique 1 et produit une sonnerie ou tout autre son caractéristique indiquant a l'usager du dispositif 1 qu'un corrrespondant l'appelle.

Lorsque cet usager soulève le combiné 2 pour répondre à cet appel, les contacts 9.1 et 9.2 se ferment. L'entrée 13e du circuit 13, qui est maintenant reliée à la borne positive de la source d'alimentation 14 par le contact 9,2, passe donc à l'état logique 1. On voit facilement que la sortie de la porte 21 passe également a l'état logique 1, de même que la sortie de la porte 28. La sortie du circuit monostable 39 délivre donc une impulsion pendant laquelle la sortie 13f du circuit 13 est à l'état logique 0, ce qui provoque le passage d'une impulsion de courant dans la bobine 6a du relais 6. Cette impulsion de courant provoque le basculement du relais 6 dans son premier état, c'est-à-dire dans l'état représenté à la figure 1, pour autant bien sûr que ce relais ne soit pas déjà dans cet état, auquel cas cette impulsion de courant n'a aucun effet.

L'impulsion produite par la sortie du circuit monostable 39 provoque d'autre part le passage de la sortie Q du flip-flop 38 a l'état logique 1, pour autant bien entendu que cette sortie ne se trouve pas déjà dans cet état.

En outre, le passage de la sortie de la porte 21 à l'état logique 1 au moment ou l'usager soulève le combiné 2 de son support provoque, par l'intermédiaire de la porte 27, le passage de la sortie Q du flip-flop 36 à l'état logique 0.

Enfin, le passage à l'état logique 1 de l'entrée 13e du circuit 13 lorsque l'usager soulève le combiné 2 à pour effet de rendre conducteur le transistor 44, et donc le transistor 10, après un certain temps déterminé par les caractéristiques du circuit temporisateur 41. Ce temps peut être, par exemple, de 500 millisecondes environ.

A partir de l'instant où le transistor 10 devient conducteur, le circuit vocal 5, et donc le combiné 2, sont reliés à la ligne A et l'usager du dispositif peut engager la conversation avec son correspondant.

La ligne A est donc maintenant occupée, et la sortie 11c du circuit 11, qui était auparavant à l'état logique 0, passe à l'état logique l, de même que l'entrée 13c du circuit 13. Ce passage a l'état 1 de l'entrée 13c du circuit 13 à pour effet de bloquer les portes 21 et 22 par l'intermédiaire de l'inverseur 31. Ainsi, un passage éventuel de l'entrée 13b du circuit 13 à l'état logique 1 en réponse à un autre signal d'appel transmis par la ligne B ne peut pas provoquer un nouveau basculement du relais 6 qui aurait pour effet d'interrompre la liaison qui vient d'être établie entre la ligne A et le circuit vocal 5.

Ce même passage à l'état 1 de cette entrée 13e n'a aucun effet sur la porte 23 qui est déjà bloquée par le signal à l'état logique 0 qu'elle reçoit de la sortie $\overline{Q}$ du flip-flop 36.

Lorsque l'usager du dispositif 1 repose le combiné 2 à la fin de la conversation, le contact 9.2 se rouvre, et l'entrée 13e du circuit 13 repasse donc à l'état logique 0.

Ce passage de l'entrée 13e à l'état logique 0 à pour effet, par l'intermédiaire de l'inverseur 32, de remettre la sortie $\overline{Q}$ du flip-flop 36 à l'état logique 1, et par l'intermédiaire du circuit temporisateur 41 et de la porte 26, de bloquer le transistor 44 et, donc, le transistor 10. La ligne A est donc de nouveau libre, et la sortie 11c du circuit 11 repasse à l'état logique 0.

On voit que le circuit 13 et le dispositif 1 se retrouvent dans le même état qu'avant l'arrivée du signal d'appel sur la ligne A, à la seule exception, éventuelle, du flip-flop 38 et du relais 6 qui gardent tous deux l'état qu'ils avaient pris lorsque l'usager avait décroché le combiné 2.

Si, dans ces conditions, un nouveau signal d'appel est transmis au dispositif 1, mais cette fois-ci par la ligne B, on voit facilement que, lorsque l'usager soulève le combiné 2 pour répondre à cet appel, c'est la sortie du circuit monostable 40 qui délivre une impulsion.

Pendant cette impulsion, la sortie 13g du circuit 13 est a l'état logique 0, ce qui provoque le passage d'une impulsion de courant dans la bobine 6b du relais 6. Ce dernier prend donc son deuxième état. En outre, l'impulsion produite par la sortie du circuit monostable 40 provoque le basculement du flip-flop 38 dans l'état où sa sortie Q est à l'état logique 0.

Enfin, comme dans le cas décrit ci-dessus ou le signal d'appel est transmis par la ligne A, la sortie $\overline{Q}$ du flip-flop 36 passe a l'état logique 0 lorsque l'usager soulève le combiné 2, et, après un certain temps, les transistors 44 et 10 deviennent conducteurs.

Le circuit vocal 5, et donc le combiné 2, sont donc reliés à la ligne B, et l'usager du dispositif 1 peut engager la conversation avec son correspondant. Comme dans l'exemple précédent, la sortie 11c du circuit 11 passe à l'état logique 1 en réponse à l'état occupe de la ligne à laquelle le dispositif 1 est relié, qui est dans ce cas la ligne B.

Toujours comme dans l'exemple précédent, lorsque l'usager repose le combiné 2 sur son support à la fin de la conversation, le circuit 13 et le dispositif 1 se retrouvent dans l'état ou ils étaient avant que le début de cette conversation, à la seule exception du flip-flop 38 et du relais 6 qui restent dans l'état qu'ils ont pris lorsque l'usager à soulevé le combiné 2.

Dans le cas où les deux lignes A et B transmettent simultanément un signal d'appel, les deux entrées 13a et 13b du circuit 13 se trouvent toutes deux à l'état logique 1. Mais l'état logique 0 qui est alors présent à la sortie de l'inverseur 30 bloque la porte 22. Ainsi, lorsque l'usager du dispositif 1 soulève le combiné 2, le circuit 13 fonctionne de la même manière, décrite ci-dessus, que lorsque seule la ligne A transmet un appel.

Si, lorsque l'usager du dispositif 1 repose le combiné 2 sur son support à la fin de la communication ainsi établie, un signal d'appel est encore, ou à nouveau, present sur la ligne B, le circuit 13 fonctionne de la même manière, décrite ci-dessus, que dans le cas où un seul appel est transmis par cette ligne B.

On à vu ci-dessus que lorsque l'usager du dispositif 1 soulève le combiné 2 pour répondre à un appel transmis par la ligne A, la sortie Q du flip-flop 38 prend l'état logique 1 et y reste après la fin de la communication. De manière analogue, cette sortie Q du flip-flop 38 prend l'état logique 0 lorsque l'usager du dispositif répond à un appel transmis par la ligne B et reste dans cet état a la fin de la communication. On verra ci-dessous que, lorsque l'usager du dispositif 1 établit lui-même une communication, la sortie Q du flip-flop 38 prend également l'état logique 1 ou l'état logique 0 selon que cette communication est établie, d'une manière qui sera décrite plus loin, sur la ligne A ou sur la ligne B, et que l'état de cette sortie ne se modifie pas à la fin de cette communication.

Entre les communications, l'état de la sortie Q du flip-flop 38 indique donc toujours avec quelle ligne, A ou B, le dispositif 1 était relié pendant la dernière communication.

Cette caracteristique est utilisée pour relier automatiquement le dispositif 1 à une ligne libre, s'il en existe une, lorsque l'usager de ce dispositif 1 soulève le combiné 2 pour appeler un correspondant.

On admettra pour commencer qu'aucun des appareils téléphoniques 15 et 16 respectivement reliés aux lignes A et B ne sont utilisés et, bien sûr, qu'aucun signal d'appel n'est transmis sur l'une ou l'autre de ces lignes. On admettra également que le relais 6 est dans son premier état.

Dans ces conditions, lorsque l'usager du dispositif 1 soulève le combiné 2 dans l'intention d'appeler un correspondant, la fermeture du contact 9.1 provoque l'application aux bornes 11a et 11b du circuit 11 de la tension relativement élevée qui est présente entre les deux fils de la ligne A. La sortie 11c du circuit 11 et l'entrée 13e du circuit 13 passent donc à l'état logique 0, ce qui bloque la porte 23. Comme en outre les sorties 7c et 8c des circuits d'appels 7 et 8, et donc les entrées 13a et 13b du circuit 13, sont également a l'état logique 0, les portes 21 et 22 sont également bloquées.

On voit facilement que, dans ce cas, aucun des circuits monostables 39 et 40 ne produit d'impulsion et que l'état du relais 6 n'est pas modifié. Par contre, comme dans les exemples décrits ci-dessus, les transistors 44 et 10 deviennent conducteurs lorsque la sortie du circuit temporisateur 41 passe à l'état logique 1.

Le circuit vocal 5 et le combiné 2 sont donc maintenant reliés a la ligne A, qui passe de l'état libre à l'état occupé. La sortie 11c du circuit 11 passe donc à l'état logique 1, mais ce changement n'a aucun effet car la porte 23 est bloquée par le signal ayant l'état logique 0 fourni par la sortie de l'inverseur 33 en réponse au signal ayant l'état logique 1 present à la sortie du circuit temporisateur 41.

L'usager du dispositif 1 peut alors commencer la sélection du numéro qu'il désire appeler en agissant sur le dispositif sélecteur 12, après qu'il à reçu du central le signal acoustique usuel lui indiquant que ce dernier est prêt à enregistrer cette sélection.

Comme cela à déjà été mentionné, la sortie 12a du dispositif sélecteur 12 produit un certain nombre d'impulsions en réponse à chaque actionnement d'une des touches de selection.

Chacune de ces impulsions provoque, par l'intermédiaire de l'inverseur 34 et de la porte 26, le blocage du transistor 44 et du transistor 10. Les interruptions de circuit provoquées par les blocages successifs du transistor 10 sont détectées, de manière bien connue, par le central auquel est reliée la ligne A et permettent ensuite à ce central d'établir la communication entre le dispositif 1 et le correspondant appelé.

Lorsque l'usager du dispositif 1 repose le combiné 2 sur son support à la fin de la conversation, ce dispositif 1 et le circuit 13 se retrouvent dans l'état qu'ils avaient avant que cet usager ne soulève le combiné 2.

On voit facilement que, si le relais 6 est dans son deuxième état, où ses contacts 6.1 et 6.2 sont ouverts et ses contacts 6.3 et 6.4 sont fermés, au moment où l'usager du dispositif 1 soulève le combiné 2 dans le but d'appeler un correspondant, le fonctionnement du circuit 13 est exactement le même que dans le cas qui vient d'être décrit, à la seule différence que, dans ce cas, la communication avec ce correspondant est établie par l'intermédiaire de la ligne B.

Lorsque l'usager du dispositif soulève le combiné 2 dans l'intention d'appeler un correspondant, et que le relais 6 se trouve dans son premier état mais que la ligne A est déjà occupée par une communication établie avec l'appareil 15, la fermeture du contact 9.1 provoque l'application aux bornes 11a et 11b du circuit 11 de la tension présente entre les fils de cette ligne A. Comme cette dernière est occupée, cette tension est relativement basse, et la sortie 11c du circuit 11 ainsi que l'entrée 13c du circuit 13 prennent dont l'état logique 1, de même que la sortie de la porte 23.

Cette sortie de la porte 23 ne reste qu'un très court instant a cet état logique 1, car ce dernier provoque le passage de la sortie Q̄ du flip-flop 37 à l'état logique 0 qui, à son tour, provoque le retour de la sortie de la porte 23 à l'état logique 0.

Cette sortie de la porte 23 délivre donc une impulsion qui est transmise à l'entrée du circuit monostable 40 par les portes 25 et 29. En effet, à cet instant, la sortie Q du flip-flop 38 se trouve a l'état logique 1 puisque le relais 6 est dans son premier état.

Le circuit monostable 40 produit donc une impulsion qui, d'une part, provoque le basculement du relais dans sa deuxième position, où ses contacts 6.1 et 6.2 sont ouverts et où ses contacts 6.3 et 6.4 sont fermés, et d'autre part provoque le passage de la sortie Q du flip-flop 38 à l'état logique 0.

Lorsque les transistors 44 et 10 deviennent conducteurs en réponse au passage à l'état logique 1 de la sortie du circuit temporisateur 41, le circuit vocal 5 est relié à la ligne B.

Si cette dernière est libre, l'usager du dispositif 1 peut alors seélectionner, à l'aide du circuit 12, le numéro du correspondant qu'il désire appeler après avoir reçu du central le signal acoustique usuel.

Si la ligne B est occupée par une communication établie avec l'appareil téléphonique 16, l'usager du dispositif 1 peut alors, s'il le desire, intervenir dans la conversation en cours pour demander que celle-ci soit interrompue et que la ligne soit libérée.

S'il ne désire pas profiter de cette possibilité, l'usager du dispositif 1 peut simplement reposer le combiné 2 sur son support lorsqu'il se rend compte que la ligne à laquelle il est relié est déjà occupée.

De toutes façons, lorsque l'usager repose le combiné 2 sur son support, le dispositif 1 reste dans l'état qu'il à à ce moment.

On voit facilement que, lorsque l'usager du dispositif 1 soulève le combiné 2 dans l'intention d'appeler un correspondant, et que le relais 6 se trouve dans son deuxiéme état mais que la ligne B est déjà occupée par une communication établie avec l'appareil 16, le circuit 13 fonctionne d'une manière analogue à celle qui à été décrite ci-dessus. Dans ce cas, cependant, l'impulsion produite par la sortie de la porte 23 est transmise à l'entrée du circuit monostable 39 par l'intermédiaire des portes 24 et 28, puisque c'est la sortie $\overline{Q}$ du flip-flop 38 qui est à l'état logique 1.

L'impulsion produite alors par le circuit monostable 39 provoque le basculement du relais 6 dans son premier état et le circuit vocal 5 se trouve donc relié à la ligne A lorsque les transistors 44 et 10 deviennent conducteurs.

Comme dans le cas précédent, si cette ligne A est libre, l'usager du dispositif 1 peut alors sélectionner le numéro du correspondant qu'il desire appeler, et si cette ligne est occupée par une communication avec l'appareil 15, il peut intervenir dans la conversation en cours pour demander que la ligne soit libérée, ou reposer le combiné 2 sur son support.

Le circuit de commande 13 peut évidemment être agencé de manière que, lorsque les deux lignes A et B sont occupées par des communications établies respectivement avec les appareils 15 et 16, c'est-à-dire lorsque la sortie 11c du circuit détecteur de tension 11 reprend l'état logique 1 après que le relais 6 à changé d'état, le transistor 10 ne soit pas rendu conducteur, et que le combiné 2 ne soit donc relié à aucune des lignes A et B.

Dans un tel cas, qui n'a pas été illustré, le circuit 13 peut être agencé de manière a produire un signal acoustique et/ou optique pour avertir l'usager du dispositif 1 que, les deux lignes A et B étant occupées, il ne peut pas appeler son correspondant.

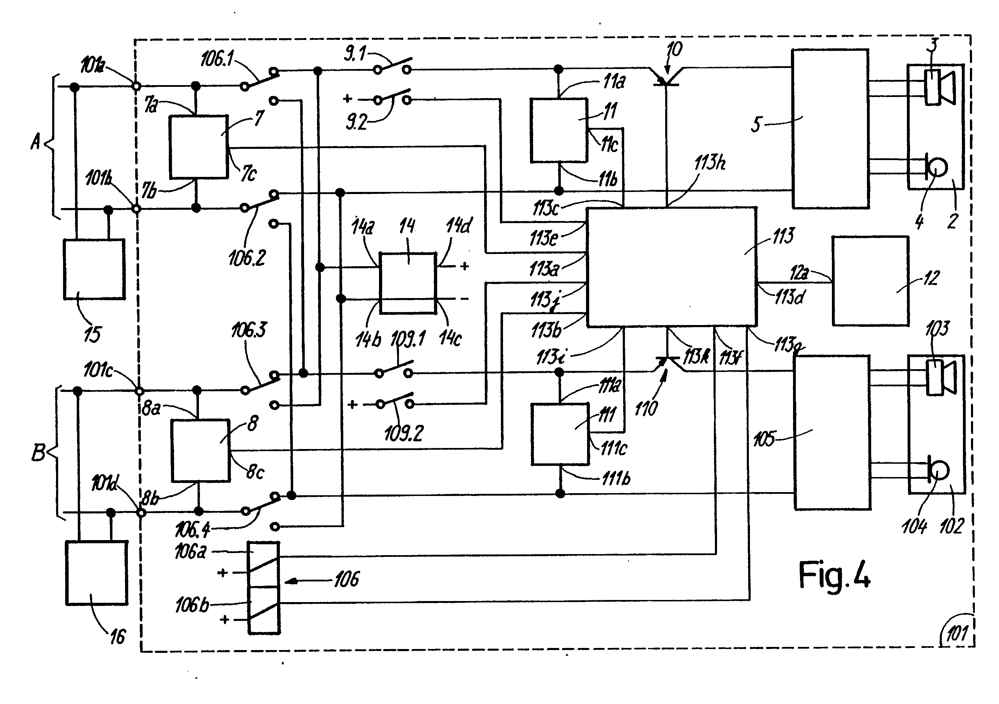

Dans la forme d'exécution du dispositif selon l'invention qui est représentée à la figure 4, celui-ci, qui est désigné par la référence 101, comporte la plupart des éléments du dispositif de la figure 1. Ces éléments sont désignés par la même référence dans les deux figures et ne seront pas décrits à nouveau ici.

Comme le dispositif 1 de la figure 1, le dispositif 101 comporte deux bornes 101a et 101b qui sont reliées à une première ligne teléphonique A, à laquelle est également branché un autre appareil 15, et deux bornes 101c et 101d qui sont reliées à une deuxième ligne téléphonique B à laquelle est également branché un autre appareil 16.

Le dispositif 101 comporte un deuxième combiné 102 comprenant un écouteur 103 et un microphone 104 qui sont reliés de manière classique à un circuit vocal 105.

Toujours comme le dispositif 1, le dispositif 101 comporte un relais bistable, désigné par 106, ayant deux bobines 106a et 106b dont une borne est reliée à la borne positive de la source d'alimentation 14. Le relais 106 comporte quatre contacts commutateurs 106.1, 106.2, 106.3 et 106.4 dont les bornes communes sont respectivement reliées aux entrées 101a, 101b, 101c et 101d du dispositif 101.

Les bornes non-communes des contacts 106.1 à 106.4 sont reliées entre elles et avec les autres éléments du dispositif de la manière représentée à la figure 4.

On voit dans cette figure 4 que, lorsque le relais 106 est dans son premier état, qui est celui représenté, la ligne A est reliée au circuit vocal 5 par l'intermédiaire du contact 9.1 et du transistor 10. On voit également que, dans le même état du relais 106, la ligne B est reliée au circuit vocal 105 par l'intermédiaire d'un contact 109.1 et d'un transistor 110.

Le contact 109.1 est analogue au contact 9.1, c'est-à-dire qu'il est ouvert lorsque le combiné 102 est posé sur son support et qu'il est fermé lorsque ce combiné 102 est soulevé de ce support pour être utilisé.

De même, le transistor 110 est analogue au transistor 10, c'est-à-dire qu'il est également un transistor pnp et qu'il est aussi rendu conducteur, dans des circonstances qui seront décrites plus loin, lorsqu'une communication doit être établie avec le combiné 102.

On voit également dans la figure 4 que, lorsque le relais 106 est dans son deuxième état, c'est la ligne A qui est reliée au circuit vocal 105 par l'intermédiaire du contact 109.1 et du transistor 110, et c'est la ligne B qui est reliée au circuit vocal 5 par l'intermédiaire du contact 9.1 et du transistor 10.

Le dispositif 101 de la figure 4 comporte encore un deuxième circuit détecteur de tension 111, analogue au circuit détecteur de tension 11. Les bornes 111a et 111b du circuit 111 sont respectivement reliées à la deuxième borne du contact 109.1 et à la première borne non-commune du contact 106.4.

Le dispositif 101 comporte en outre un circuit de commande 113 ayant des entrées 113a à 113e respectivement reliées, comme les entrées 13a à 13e du circuit 13 de la figure 1, aux sorties 7c, 8c, 11c et 12a des circuits d'appel 7 et 8, du détecteur de tension 11 et du circuit formateur d'impulsions de selection 12, et à la deuxième borne du contact 9.2.

Le circuit de commande 113 comporte encore deux sorties 113f et 113g respectivement reliées aux deuxièmes bornes des bobines 106a et 106b, et une sortie 113h reliée à la base du transistor 10.

Le circuit de commande 113 comporte également deux entrées 113i et 113j respectivement reliées à la sortie 111c du circuit détecteur de tension 111 et à une borne d'un contact 109.2 qui est lié mécaniquement au contact 109.1 de manière à être ouvert et fermé en même temps que ce dernier. L'autre borne de ce contact 109.2 est reliée à la borne positive de la source d'alimentation 14.

Enfin, le circuit de commande 113 comporte une sortie 113k reliée à la base du transistor 110.

La constitution du circuit de commande 113 ne sera pas décrite en détail, car elle pourra être aisément déduite de la description du fonctionnement du dispositif 101 qui va être faite maintenant.

Pour commencer cette description, on admettra que les deux combinés 2 et 102 sont posés sur leurs supports respectifs.

Lorsqu'un signal d'appel est transmis par la ligne A et qu'un usager soulève le combiné 2 pour répondre à cet appel, le circuit 113 réagit aux états logiques 1 qu'il reçoit alors sur ses entrées 113a et 113e en appliquant une impulsion de courant à la bobine 106a du relais 106 qui prend donc son premier état, pour autant évidemment qu'il ne soit pas déjà dans cet état.

En outre, un petit instant, après la fermeture du contact 9.2, le circuit 113 met le transistor 10 dans son état conducteur. Le combiné 2 est donc maintenant relié à la ligne A par l'intermédiaire du circuit vocal 5.

Si l'usager soulève le combiné 102 pour répondre à un signal d'appel transmis par la ligne B, le circuit 113 applique également une impulsion de courant à la bobine 106a du relais 106 en réponse aux états logiques 1 qu'il reçoit dans ce cas sur ses entrées 113b et 113j, et, un petit instant après la fermeture du contact 109.2, met le transistor 110 dans son état conducteur. Le relais 106 prend donc également son premier état, s'il ne l'avait pas déjà, et le combiné 102 est relié à la ligne B par l'intermédiaire du circuit vocal 105.

De même, si l'usager soulève le combiné 2 pour répondre à un signal d'appel transmis par la ligne B, ou soulève le combiné 102 pour répondre à un signal d'appel transmis par la ligne A, le circuit 113 réagit aux états logiques 1 qu'il reçoit sur ses entrées 113b et 113e, ou sur ses entrées 113a et 113j, en appliquant une impulsion de courant à la bobine 106b du relais 106, de sorte que ce dernier prend son deuxième état s'il n'y etait pas déjà.

En outre, le circuit 113 rend conducteur le transistor 10, dans le premier cas, ou le transistor 110, dans le deuxième cas, de sorte que le combiné 2 est relié à la ligne B, ou que le combiné 102 est relié à la ligne A.

Lorsqu'un usager desire utilisér le dispositif 101 pour appeler un correspondant, les divers cas suivants peuvent se présenter :

1. L'usager soulève le combiné 2 alors que :
- la ligne A est libre et le relais 106 se trouve dans son premier état ; ou
- la ligne B est libre et le relais 106 se trouve dans son deuxième état ; ou
- les deux lignes A et B sont libres.

Dans ce cas, la sortie 11c du circuit détecteur de tension 11 passe à l'état logique 0 en réponse à la tension relativement élevée qui est appliquée aux bornes 11a et 1lb de ce circuit 11 suite à la fermeture du contact 9.1, quel que soit l'état du relais 106. Le circuit 113 n'applique alors aucune impulsion de courant aux bobines 106a et 106b du relais 106 qui ne change donc pas d'état. Par contre, un petit instant après la fermeture du contact 9.2, le circuit 113 rend le transistor 10 conducteur, reliant ainsi le combiné 2 à la ligne A, si le relais 106 est dans son premier état, ou à la ligne B si ce relais 106 est dans son deuxième état. En outre, le circuit 113 relié indirectement son entrée 113d à sa sortie 113h de manière que le transistor 10 soit à nouveau bloqué en réponse à chacune des impulsions produites par le circuit formateur d'impulsions de sélection 12 lorsque l'usager actionne les touches de ce dernier pour sélectionner le numéro du correspondant qu'il désire appeler.

2. L'usager soulève le combiné 102 alors que :
- la ligne A est libre et le relais 106 est dans son deuxième état ; ou
- la ligne B est libre et le relais 106 est dans son premier état ; ou
- les deux lignes A et B sont libres.

Dans ce cas, c'est la sortie 111c du circuit détecteur de tension 111 qui passe à l'état logique 0 en réponse à la tension relativement élevée qui est appliquée aux bornes 111a et 111b de ce circuit 111 suite à la fermeture du contact 109.2, quel que soit l'état du relais 106. Dans ce cas le circuit 113 n'applique pas non plus d'impulsion aux bobines 106a et 106b du relais 106 mais, un petit instant après la fermeture du contact 109.2, ce circuit 113 rend le transistor 110 conducteur, reliant ainsi le combiné 102 à la ligne B si le relais 106 est dans son premier état, ou à la ligne A si le relais 106 est dans son deuxième état. En outre, le circuit 113 relie indirectement son entrée 113d à sa sortie 113k de manière que, lorsque l'usager sélectionne le numéro de son correspondant, le transistor 110 soit bloqué en réponse à chacune des impulsions produites par la sortie 12a du circuit 12.

3. L'usager du dispositif 101 soulève le combiné 2 alors que le relais 106 est dans son premier état et que la ligne A est déjà occupée par une communication établie avec l'appareil 15.

Dans ce cas, la sortie 11c du circuit détecteur de tension 11 et donc l'entrée 113c du circuit 113 passent à l'état logique 1 en réponse à la tension relativement basse qui est appliquée aux bornes 11a et 11b de ce circuit 11 par la fermeture du contact 9.1.

Si, au moment où cette entrée 113c du circuit 113 passe à l'état logique 1, l'entrée 113j du circuit 113 est à l'état logique 0 parce que le combiné 102 n'est pas utilisé, ce circuit 113 applique une impulsion de courant à la bobine 106b du relais 106, qui prend donc son deuxième état.

Comme dans le cas 1 ci-dessus, le circuit 113 rend en outre le transistor 10 conducteur un petit instant après la fermeture du contact 9.2 et relié indirectement son entrée 113d à sa sortie 113h. Le combiné 2 est donc relié à la ligne B par l'intermédiaire du circuit vocal 5.

Si cette ligne B est libre, l'usager peut alors sélectionner le numéro du correspondant qu'il désire appeler. Si par contre la ligne B est déjà occupée par une communication établie avec l'appareil 16, l'usager du dispositif 101 peut s'intercaler dans cette communication pour demander la libération de la ligne, ou reposer le combiné 2 sur son support.

Si, au moment où l'entrée 113c du circuit 113 passe à l'état logique 1, l'entrée 113j de ce circuit 113 est à l'état logique 1 parce que le combiné 102 est déjà utilisé, ce circuit 113 n'applique pas d'impulsion à la bobine 106b du relais 106, pour ne pas interrompre la communication qui est en cours avec le combiné 102 par l'intermédiaire de la ligne B. Le relais 106 garde donc son premier état et, lorsque le circuit 113 rend le transistor 10 conducteur un petit instant après la fermeture du contact 9.2, le combiné 2 est relié à la ligne A. L'usager du dispositif 101 peut alors s'intercaler dans la communication en cours sur cette ligne A pour demander la liberation de celle-ci, ou reposer le combiné 2 sur son support.

4. L'usager du dispositif soulève le combiné 102 alors que le relais 106 est dans son premier état, et que la ligne B est déjà occupée par une communication etablie avec l'appareil 16.

Dans ce cas, la sortie 111c du circuit 111, et donc l'entrée 113i du circuit 113 passent à l'état logique 1 en réponse à la tension relativement basse qui est appliquée aux bornes 111a et 111b de ce circuit 111 par la fermeture du contact 109.1.

Si, au moment où cette entrée 113c du circuit 113 passe à l'état logique 1, l'entrée 113e du circuit 113 est à l'état logique 0 parce que le combiné 2 n'est pas utilisé, ce circuit 113 applique une impulsion de courant à la bobine 106b du relais 106 qui prend donc son deuxième état.

Comme dans le cas 2 ci-dessus, le circuit 113 rend en outre le transistor 110 conducteur un petit instant après la fermeture du contact 109.2, et relié indirectement son entrée 113d à sa sortie 113k. Le combiné 102 est donc relié à la ligne A par l'intermédiaire du circuit vocal 105.

Si cette ligne A est libre, l'usager peut alors sélectionner le numéro du correspondant qu'il desire appeler. Si par contre la ligne A est déjà occupée par une communication etablie avec l'appareil 15, l'usager du dispositif 101 peut s'intercaler dans cette communication pour demander la libération de la ligne, ou reposer le combiné 102 sur son support.

Si, au moment où l'entrée 113i du circuit 113 passe à l'état logique 1, l'entrée 113c du circuit 113 est à l'état logique 1 parce que le combiné 2 est déjà utilisé, ce circuit 113 n'applique pas d'impulsion à la bobine 106b du relais 106, pour ne pas interrompre la communication qui est en cours avec le combiné 2 par l'intermédiaire de ligne A. Le relais 106 garde donc son premier état et, lorsque le circuit 113 rend le transistor 110 conducteur un instant après la fermeture du contact 109.2, le combiné 102 est donc relié à la ligne B. L'usager du dispositif 101 peut alors s'intercaler dans la communication en cours sur cette ligne B pour demander la libération de celle-ci, ou reposer le combiné 102 sur son support.

5. L'usager du dispositif 101 soulève le combiné 2 alors que le relais 106 est dans son deuxième état et que la ligne B est déjà occupée par une communication établie avec l'appareil 16.

Dans ce cas, comme dans le cas 3 ci-dessus, la sortie 11c du circuit détecteur de tension 11 et donc l'entrée 113c du circuit 113 passent à l'état logique 1 en réponse à la fermeture du contact 9.1.

Si, au moment ou cette entrée 113c du circuit 113 passe à l'état logique 1, l'entrée 113j de ce circuit 113 est à l'état logique 0 parce que le combiné 102 n'est pas utilisé, ce circuit 113 applique une impulsion de courant à la bobine 106a du relais 106, qui prend donc son premier état.

Comme dans le cas 1 ci-desus, le circuit 113 rend en outre le transistor 10 conducteur un petit instant après la fermeture du contact 9.2, et relié indirectement son entrée 113d à sa sortie 113k. Le combiné 2 est donc relié à la ligne A par l'intermédiaire du circuit vocal 5.

Si cette ligne A est libre, l'usager peut alors sélectionner le numéro du correspondant qu'il désire appeler. Si par contre cette ligne A est déjà occupée par une communication établie avec l'appareil 15, l'usager du dispositif 101 peut s'intercaler dans cette communication pour demander la libération de la ligne, ou reposer le combiné 2 sur son support.

Si, au moment ou l'entrée 113c du circuit 113 passe à l'état logique 1, l'entrée 113j de ce circuit 113 est à l'état logique 1 parce que le combiné 102 est déja utilisé, ce circuit 113 n'applique pas d'impulsion à la bobine 106a du relais 106, pour ne pas interrompre la communication qui est en cours avec le combiné 102 par l'intermédiaire de la ligne A.

Le relais 106 garde donc son deuxième état et, lorsque le circuit 113 rend le transistor 10 conducteur un instant après la fermeture du contact 9.2, le combiné 2 est donc relié à la ligne B. L'usager du dispositif 101 peut alors s'intercaler dans la communication en cours sur cette ligne B pour demander la libération de celle-ci, ou reposer le combiné 2 sur son support.

6. L'usager du dispositif 101 soulève le combiné 102 alors que le relais 106 est dans son deuxième état et que la ligne A est déjà occupée par une communication établie avec l'appareil 15.

Dans ce cas, comme dans le cas 4 ci-dessus, la sortie 111c du circuit détecteur de tension 111 et l'entrée 113i du circuit 113 passent à l'état logique 1 en réponse à la fermeture du contact 109.1.

Si, au moment où cette entrée 113i du circuit 113 passe à l'état logique 1, l'entrée 113e de ce circuit 113 est à l'état logique 0 parce que le combiné 2 n'est pas utilisé, ce circuit applique une impulsion de courant à la bobine 106a du relais 106 qui prend donc son premier état.

Comme dans le cas 2 ci-dessus, le circuit 113 rend en outre le transistor 110 conducteur un petit instant après la fermeture du contact 109.2, et relié indirectement son entrée 113d à sa sortie 113k. Le combiné 102 est donc relié à la ligne B par l'intermédiaire du circuit vocal 105.

Si cette ligne B est libre, l'usager peut alors sélectionner le numéro du correspondant qu'il desire appeler. Si par contre cette ligne B est déjà occupée par une communication établie avec l'appareil 16, l'usager du dispositif 101 peut s'intercaler dans cette communication pour demander la libération de la ligne, ou reposer le combiné 102 sur son support.

Si, au moment où l'entrée 113i du circuit 113 passe à l'état logique 1, l'entrée 113e de ce circuit 113 est à l'état logique 1 parce que le combiné 2 est déjà utilisé, ce circuit 113 n'applique pas d'impulsion à la bobine 106a du relais 106, pour ne pas interrompre la communication qui est en cours avec le combiné 2 par l'intermédiaire de la ligne B. Le relais 106 garde donc son deuxième état, et, lorsque le circuit 113 rend le transistor 110 conducteur un instant après la fermeture du contact 109.2, le combiné 102 est relié à la ligne A. L'usager du dispositif 101 peut alors s'intercaler dans la communication en cours sur cette ligne A pour demander la libération de celle-ci, ou reposer le combiné 102 sur son support.

Il est évident que, comme le circuit de commande 13 du dispositif 1 de la figure 1, le circuit de commande 113 du dispositif 101 de la figure 4 peut être agencé de manière que le transistor 10 ou le transistor 110 ne soit pas rendu conducteur après qu'un usager a soulevé le combiné 2 ou le combiné 102 pour appeler un correspondant alors que les deux lignes A et B sont occupées. Dans un tel cas, le circuit de commande 113, comme le circuit 13, comporte avantageusement des moyens produisant un signal optique et/ou acoustique pour signaler à l'usager qu'il ne peut pas utiliser le dispositif 101 pour appeler un correspondant.

Il est également évident que le circuit de commande 13 peut avoir une constitution différente de celle qui a été décrite, ou même qu'il peut être remplace par un micro-ordinateur programmé de manière à remplir les mêmes fonctions. Il en est de même du circuit de commande 113.

Il est en outre évident que la présente invention n'est pas limitée aux formes d'exécution du dispositif téléphonique qui viennent d'être décrites.

Ainsi, par exemple, la présente invention s'applique également a un dispositif téléphonique destine à être relié à plus de deux lignes téléphoniques et/ou comportant plus de deux combinés indépendants.

Cette invention s'applique aussi aux cas semblables à celui qui a été décrit à l'aide des figures 1 et 2 mais où le dispositif téléphonique ne comporte pas de base, tous les éléments de ce dispositif étant réunis dans le boîter du combiné. Dans de tels cas, les contacts tels que les contacts 9.1 et 9.2 de la figure 1 peuvent par exemple être actionnés par un bouton poussoir ou par un bouton coulissant.

La présente invention s'applique encore aux cas où la base du dispositif téléphonique forme elle-même un des deux combinés, comme dans le dispositif décrit par le brevet US-A-4 817 138.

**Revendications**

1. Dispositif téléphonique (1; 101) destiné à être relié à une pluralité de lignes téléphoniques (A, B) susceptibles de présenter chacune un état libre et un état occupé et de transmettre chacune un signal d'appel, comportant un ensemble électro-acoustique (2, 5; 2, 5, 102, 105) comprenant un microphone (4; 4, 104) et un écouteur (3; 3, 103) et des moyens de commutation (6, 13; 106, 113) répondant à l'un quelconque desdits signaux d'appel pour relièr sélectivement ledit ensemble électro-acoustique (2, 5; 2, 5, 102, 105) à celle desdites lignes (A, B) qui transmet ce signal d'appel, caractérisé par le fait qu'il comporte en outre des moyens (9.2; 9.2, 109.2) pour produire un signal d'utilisation dudit ensemble électro-acoustique (2, 5; 2, 5, 102, 105) et des moyens (11; 11, 111) pour produire un signal d'occupation en réponse à l'état occupé de celle desdites lignes qui est reliée audit ensemble électro-acoustique (2, 5; 2, 5, 102, 105), et par le fait que lesdits moyens de commutation (6, 13; 106, 113) répondent en outre audit signal d'utilisation et audit signal d'occupation pour reliér ledit ensemble électro-acoustique (2, 5; 2, 5, 102, 105) à une autre desdites lignes (A, B).

Fig.1

EP 0 403 923 A1

Fig. 2

EP 0 403 923 A1

Fig.3

Fig. 4

EP 0 403 923 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,A | EP-A-0 287 511 (ETA S.A. FABRIQ. D'EBAUCHES)<br>* Figure 5; colonne 7, ligne 15 - colonne 8, ligne 59 *<br>--- | 1 | H 04 M   1/72<br>H 04 M   9/02 |
| A | FR-A-2 622 380 (COUSIN)<br>* Figure 1; page 3, ligne 20 - page 4, ligne 29 *<br>--- | 1 | |
| A | DE-A-2 914 337 (TELEFONBAU)<br>------ | | |

**DOMAINES TECHNIQUES RECHERCHES (Int. Cl.5)**

H 04 M

Le présent rapport a été établi pour toutes les revendications

| Lieu de la recherche | Date d'achèvement de la recherche | Examinateur |
|---|---|---|
| LA HAYE | 07-09-1990 | VANDEVENNE M.J. |